# EUROPEAN PATENT APPLICATION

(11) **EP 1 612 596 A1**
(43) Date of publication of application: **04.01.2006**
(21) Application number: 04015240.7
(22) Date of filing: 29.06.2004
(51) Int. Cl.: G02F 1/1334

(54) **High-efficient, tuneable and switchable optical elements based on polymer-liquid crystal composites and films, mixtures and a method for their production**

(71) Applicant: Fraunhofer-Gesellschaft zur Förderung der angewandten Forschung e.V., 80686 München (DE)
(72) Inventor: Stumpe, Joachim, 14641 Nauen (DE); Slussarenko, Sergej, Kiev (UA); Sakhno, Oksana, 12203 Berlin (DE)
(74) Representative: Olgemöller, Luitgard Maria

(57) **Abstract**

The present invention relates generally to homogeneous, and preferably isotropic, non-scatterings films, made from mixtures comprising at least one photocurable monomer or oligomer in admixture with at least one liquid crystal or a liquid crystal mixture and preferably being arranged on a substrate or between two such substrates. An irradiation procedure with a non-homogeneous field of actinic light transfers the initially homogeneous film in a film which is characterized by areas comprising at least mainly photocured polymer and areas comprising at least mainly liquid crystal or liquid crystal mixtures. Such films may have 1D, 2D or 3D diffraction structures, and may for example be used as transmission, reflection or slantwise gratings or other optical elements for a wide variety of purposes. The diffractive structures are characterized by low values of light scattering, high anisotropy, a high switching contrast, a fast electro-optical response and a wide tuneable spectral region.

## Description

The present invention relates generally to homogeneous, and preferably isotropic, non-scatterings films, made from mixtures comprising at least one photocurable monomer or oligomer in admixture with at least one liquid crystal or a liquid crystal mixture and preferably being arranged on a substrate or between two such substrates. An irradiation procedure with a non-homogeneous field of actinic light transfers the initially homogeneous film in a film which is characterized by areas comprising at least mainly photocured polymer and areas comprising at least mainly liquid crystal or liquid crystal mixtures. Such films may have 1D, 2D or 3D diffraction structures, and may for example be used as transmission, reflection or slantwise gratings or other optical elements for a wide variety of purposes. The diffractive structures are characterized by low values of light scattering, high anisotropy, a high switching contrast, a fast electro-optical response and a wide tuneable spectral region.

It has been shown that transmission and reflection holographic elements based on polymer dispersed liquid crystal structures, so called PDLC or HPDLC, are attractive for the construction of low loss electro-optic switches more than 10 years ago. Polymer dispersed liquid crystal (LC) materials, the method of optical element fabrication and related devices aimed for use are described in a number of articles and patents. The HPDLC gratings are characterized as volume phase gratings. Typically, the HPDLC morphology includes isolated or interconnected droplets containing nematic or smectic liquid crystal material, embedded in a polymer matrix, the droplets being randomly distributed in the polymer matrix and also being without an initial orientation, but being sensitive to switching by the application of an electrical field. Usually, photocrosslinkable monomers, oligomers, or polymers are used for the fabrication of (H)PDLC systems. These systems are characterized by a scattering "off"-state and a non-scattering "on"-state, in which the LC droplets are homogeneously aligned by an electric field.

It has not only been discovered that numerous characteristics of a PDLC film can be altered by varying the size of the LC droplets within the film, but also that LC droplets size can be controlled by carefully selecting the environment in which the polymerization of the film takes place. It is well known from PDLC technology that LC droplets size increase with lower exposure intensities and decrease with greater exposure intensities. The threshold and operating voltages of the films for optical transmission can be increased by reducing the droplets size or decreased by increasing the droplets size; its contrast ratio and absolute transmittance, its optical response times are dependent from the droplets size as well. The temperature at which the polymerization takes place and the LC concentration can also be selected to determine the electro-optic properties of the film.

Holographic optical elements (HOE), switchable under the influences of electric or magnetic field or temperature find a wide range of application in different opto-electronic systems and telecommunication networks. Usually these HOE are based on the above described polymer dispersed liquid crystal materials.

For example, Stone et al. in Proc. SPIE 4112, 38-47 (2000) describe optical switches based on cascades of electrically switchable PDLC transmission gratings. Such gratings operate in the Bragg regime wherein an incoming optical beam is switched between the zero- and first-diffracted orders via an applied electric field.

Further, Sutherland et al. in US 5,942,157 describe the formulation of PDLC materials and their application in the holographic preparation of electrically switchable diffractive and refractive devices. In this reference, a description of the switching mechanism of PDLC grating is provided, and the condition for optical transparency is described as requiring the polymer index of refraction to be equal to the ordinary refractive index of usual nematic liquid crystal mixtures.

Bunning et al. in Polymer 36(14), 2699-2708 (1995) describe the operation of HPDLC transmission gratings. As in the aforementioned document, a simple description is provided to describe the optically clear state of the gratings.

In US 4,688,900, Doane et al. describe PDLC light modulating materials that can be switched from a substantially scattering state to a substantially clear state, either using the application of an electric field or thermally, by heating the PDLC materials. In U.S. Pat. No. 4,890,902, Doane et al. describe PDLC materials with selectable viewing angles. In particular, formulations are described which allow the preparation of PDLC films that can be switched to a clear state for a selected viewing angle, or a range of viewing angles. This is accomplished by selecting the polymer content of the PDLC according to the index of refraction.

In US 5,096,282, Margerum et al. describe a method to form PDLC elements from mixtures consisting of LCs dissolved in monomers. During photopolymerization of such solutions, films having a dispersion of LC droplets therein form. Correlation between the LC droplets size and selected characteristics of the film are found. It was shown that by controlling the conditions of photopolymerization, the LC droplet size may be selected which corresponds to the desired film characteristics. Correlations are established between the LC droplets size, the resulting film's threshold and the operating voltages for optical transmission, contrast ratio, absolute transmittance and electro-optical response times.

In US 6,115,152, Popovich at al. describe switchable holographic optical elements based on PDLC materials with controllable diffractive parameters. Different types of the initial mixture and possible methods to control the parameters of the final structures are shown.

Although HPDLC structures have outstanding properties, their use is restriced due to their light-scattering properties, high switching voltage and too large time-response.

It is a problem of the present invention to overcome this disadvantage and to provide an optical element, for example a transmission or reflection or slantwise grating or having any other desirable and artificially controlled structure for any optical purpose, comprising an inhomogeneous distribution of polymer areas and optically clear liquid crystal areas, which is essentially or substantially free of light scattering and which exhibits strong anisotropy, high diffraction efficiency, a short time-response and a high switching contrast.

Surprisingly, the present inventors found a new composite material and specific processing conditions whereby a new type of optical films can be created which may be used as diffractive optical elements (or holographic optical elements, HOE), which combine all these properties. They normally have the shape of a film on one or between two substrates and are characterized by a novel distribution of areas of different chemical and physical properties within the film, i.e. they do not show a droplet-like morphology of the liquid crystal areas as outlined above but contain separate, switchable areas or domains of aligned LC "frozen" into a crosslinked photopolymer matrix which is transparent or light transmitting for actinic light. These domains or areas may either extend from one surface of the film to the other, or LC areas and crosslinked photopolymer matrix may constitute alternating layers which extend along the plane of the film. In another variant, LC areas are completely surrounded by the crosslinked photopolymer matrix. This variant differs from the known, stochastic droplet structures of PDLCs in that the areas are located within the polymer in a well defined, ordered and/or periodical structure wherein the LC areas are optically clear, even before any voltage or other switching measure has been applied thereto or therethrough. This type of structures is characterized by much lower values or even the absence of light-scattering properties, transparency of the films obtained, strong anisotropy after the holographic or other exposure preparation step and higher electro-optical parameters of the final optical elements than earlier presented structures.

The inventive films, disposed on a substrate or contained within the narrow space between two substrates, may be designated as POLIPHEM films (POlymer Liquid Crystal Polymer Holograms Electrically Managable). These structures may serve as electrically switchable and tuneable optical elements on the basis of micro-patterned POLIPHEM films.

Starting from an initially homogenous and preferably optically isotropic mixture of photocurable monomers and/or oligomers and liquid crystals or a liquid crystal mixture, optionally in admixture with additional components and/or in the presence of a photoinitiator, as far as required or desired, a film is initially formed on a substrate or between two substrates which is likewise homogeneous and preferably optically isotropic. Due to its homogeneity, the mixture, and therefore also the film, is non-scattering. A phase separation is then obtained under the irradiation of a pattern of bright(er) and dark(er) areas of light, preferably performed as a one-step photopolymerization. By this illumination, periodic or otherwise ordered structures consisting of polymer- and LC-rich regions with a separate, aligned mono-domain morphology of the LC are formed. The phase separation may be a complete one, or some liquid crystal may remain entrapped in the polymer structure, while some monomers or oligomers, slightly polymerized or (further) oligomerized, may be present in the LC rich regions.

These POLIPHEM films differ from prior known holographic PDLC structures by the absence of light scattering, by a very strong anisotropy due to areas comprising or consisting of aligned LC and by a decreased time response. POLIPHEMS may operate as optical elements, for example as transmission or reflection diffraction volume gratings which can be switched between the diffractive and non-diffractive state by the application of an electric, electromagnetic or a magnetic field. Therefore, these structures may be used as optical switches. POLIPHEM based Bragg reflection gratings are tuneable which means that their reflection spectral band may be shifted within the wavelength scale upon application of an electric, electromagnetic or magnetic field. The morphology of the structure can be controlled by selecting a proper relation between the amount of monomers/oligomers and liquid crystals or a liquid crystal mixture, respectively, depending from the nature of the selected components, as known by a chemist or other skilled artisan. Moreover, the exposure intensity, exposure temperature, exposure wavelength and/or concentration of photoinitiator can be properly adapted, depending on the type of polymer and/or photoinitiator and the desired efficiency of the phase separation.

Thus, the present invention relates generally to thin films, made from photocurable monomers (oligomers) in admixture with liquid crystals (LC) or LC in a liquid crystal mixture, and if desired or required with photoinitiator and possibly other additives, and preferably to polymer-LC based transmission or reflection diffraction holographic gratings (produced holographically or through masks) or other optical elements based on these films or coatings, comprising first areas being composed of solely, substantially or mainly photocured polymer and second areas being composed of solely, substantially or mainly liquid crystals or a liquid crystal mixture. In contrast to the known (H)PDLC structures, it is a specific feature of the said films or optical elements that the said areas are either arranged in such a way that the first and second areas alternate in at least a first plane, while the composition of the film is substantially invariable in a direction which is angular to the said first plane, or that the said areas are located in an artificial, ordered, preferably periodic pattern and that the LC areas are optically clear and non-scattering, even in case they have never undergone an initial electrical, electromagnetic or magnetic switching. Such films and optical elements have a low value of light scattering, a high switching contrast, a short response time and widely tunable spectral regions.

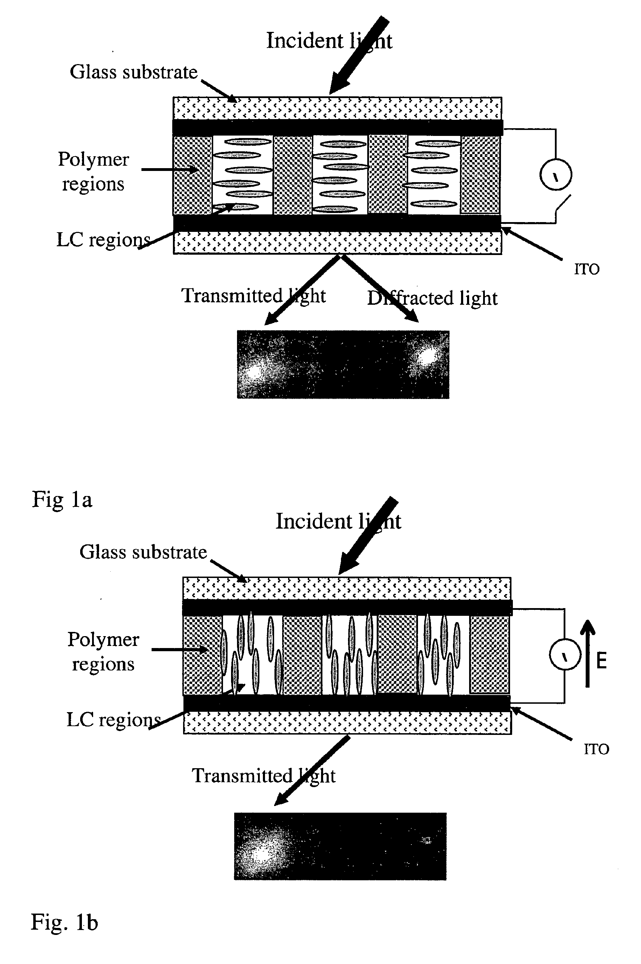

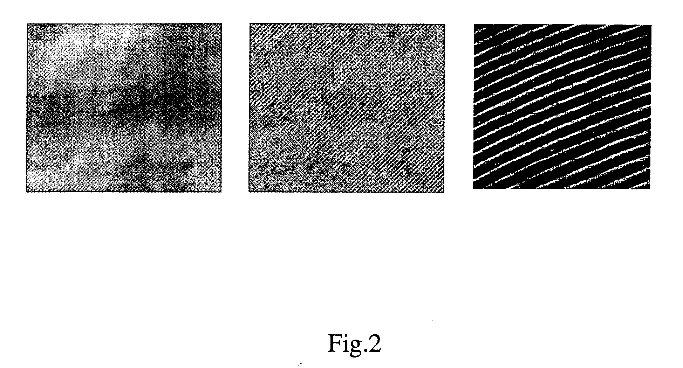

If the first and second areas are arranged such that they alternate in at least a first plane, but not in a second plane angular to said first plane, they may form periodically arranged 1 D and 2D structures wherein areas the composition of which is invariable extend either from one surface of the film to the opposite surface, or wherein the film consists of layers the composition of which is invariable and which extend along the film plane. In the first case, the invariably extending structures may be, but are not necessarily, in a plane perpendicular to the film plane, as depicted in the schemes of Fig. 1, or they may be tilted or slanted. They may be arranged in straight or curved fringes, stripes or lines, as shown in Fig. 2, or they may be completely surrounded by the respective other area, i.e. in a rod-like manner. Such 1 D or 2D films may be used e.g. as transmission gratings. In case the invariable areas are located in the form of alternating layers extending along or substantially along the film plane, the films may be used e.g. as reflection gratings. In any of the mentioned cases, such a film structure may be obtained by irradiation of the film with a non-homogeneous field of actinic light producing a respective pattern of bright and dark areas within the film which may e.g. be holographic irradiation, as detailed below, or irradiating the film with polarized light, using a mask (so called amplitude mask). More sophisticated diffractive structures of the said polymer regions and LC regions can differ from a lined shape (such as bead-like or other 3D structure), and these may be fabricated under application of more complicated configurations of spatially modulated light field using 3 or even more beams. In all cases the initial film should fix adequately the incident inhomogeneous light fields.

The concrete pattern selected for a film of the invention will depend on the intended purpose in using the film as or within an optical element.

Thus, the metioned parameters of the POLIPHEM films of the present invention parameters are described in the context of providing, as a preferred aim, optimized transmission and reflection holographic diffraction gratings (and lithographic structures) with low-scattering, high anisotripy and fast response time, while a wide variety of additional uses in optical elements is possible.

POLIPHEM films according to the present invention thus relate to a specific class of mixed polymer- liquid crystal composite materials in which two phases separate spontaneously upon photo-induced polymerization. The invention aims on techniques for the creation of holographic polymer-LC periodic structures having new and useful properties. Holographic diffraction gratings prepared according to the present invention can be employed in the Bragg or in the Raman-Nath regimes. The operating of the grating in a proper regime is determined by the ratio of period and thickness of the structure. In the Bragg regime, only two diffraction orders (0 and -1) are observed and angular and spectral parameters of both light and gratings fulfil the Bragg condition. Diffraction efficiency of Bragg gratings can reach up to 100%, and those gratings have spectral and angular dependence of the diffraction efficiency. In the Raman-Nath regime, a multiplicity of diffractive orders exists. Diffraction efficiency does not exceed 34% for sinus distribution of the refractive index and the diffraction is described by the general diffraction question. (Optical Holography R.J. Colier, C.B. Burckhardt, L.Y. Lin, 1971, Acad. Press, N.Y. London, 1973, 686 p.) POLIPHEM of this invention exhibit extremely low light scattering losses, high refractive index modulation, switching times in the microsecond scale, and a high contrast between "off' and "on" states.

As outlined above, polymer-LC diffractive and other structures are provided by this invention, consisting or comprising of alternating regions of mainly, almost or completely pure polymer and mainly, almost or completely pure LC or liquid crystal mixture. The LC or the LC mixtures are embedded in a photocrosslinked polymer network, but not in the form of droplets as in the aforementioned (H)PLDC structures, but extending in well defined structures as outlined above. The almost pure LCs areas, e.g. lines or "fringes" aligned between the polymer fringes can be easily switched by an electrical, electromagnetic or magnetic field. The orientation and form of these regions is dependent on the selected type of optical element (e.g. intended for transmission or reflection or both) and on the dimension of the structure (1D, 2D or 3D).

In a specific embodiment of this invention, low-scattering diffraction structures are provided having a strong anisotropy and short switching time when subjected to an electric, electromagnetic or magnetic field, the high switching contrast being obtained by using proper irradiation conditions as outlined below to ensure a full or almost or at least substantially full phase separation of the initial mixture. Evidence of the existence of the mentioned structure formation may be obtained by observation of the specific form (two stages) of the kinetic curve of the holographic recording, high final diffraction efficiency (up to 99%), very low light-scattering and strong anisotropy (determined by oriented LC in LC-rich regions) of the final structure obtained by the irradiation step.

If the films of the present invention are used as 1 D and 2D volume gratings, they can be used as or in a multiplicity of optical devices. Examples are beam splitters, beam deflectors, dispersion elements, narrow-band reflectors or volume holographic diffusers. They can be further used as switchable beam-steering devices for free-space optical coupling, tuneable spectral filters and, especially, for waveguide systems. In order to be useful for telecommunications and other applications, it is desirable that the switchable gratings operate in the Bragg regime and can be switched between diffracting and non-diffracting states ("off-state" and "on-state") via an applied electric (or electromagnetic or magnetic) field or via heating. Further, it is desirable that the gratings provide high contrast, low loss, low operating voltage and short response time.

For a better understanding of the present invention, reference is made to the accompanying figures, wherein:
Fig. 1a,b is a schematic representation of POLIPHEM transmission grating after the holographic recording without and with an applied electrical field;
Fig. 2 shows a POLIPHEM grating a) Λ= 0.9µm and b) Λ= 1.2 µm and c) part of a Fresnel lens based on POLIPHEM (with a distance between neighbour areas near 6 µm) showing the lines or "fringes" of the structures between crossed polarizers;
Fig. 3 is an atomic force microscopy picture of POLIPHEM structure after the removal of the upper substrate (Λ= 1.2µm);
Fig. 4 shows kinetic curves of the holographic recording of POLIPHEM gratings with different recording intensities: a) I=30 mW/cm², b) 80 mW/cm²
Fig. 5. illustrates the intensity of the diffracted beam via the applied voltage: a) transmission grating Λ=0.9 µm, d=12 µm (without over-modulation), b) transmission grating Λ=0.9 µm, d=12 µm (with over-modulation)
Fig.6 is a schematic representation of a POLIPHEM film functioning as a tunable spectral filter.

As outlined above, the films of the present invention are obtained by forming a homogeneous, preferably optically isotropic film on a substrate or between two substrates, the film being prepared from a homogeneous and preferably isotropic, photocurable mixture, containing or consisting of a photopolymerizable component (composed of one or more monomers or/and oligomers), photoinitiator, if required or desired, and liquid crystal (LC) molecules or a LC mixture, optionally in admixture with additional components. The initial mixture should be selected such that an optically clear, preferably non-scattering isotropic film of good quality can be formed which contains a relatively high amount of LC. Homogeneity of the initial mixture should be present at least in a temperature range of about 15-25°C. The same applies for the case that the film is optically isotropic.

Thus, the two major components of the photocurable mixture, the photopolymerizable component and the liquid crystal component, should be completely miscible when provided at the above mentioned temperature range of about 15-25°C and will normally be combined in the said temperature range. However, in specific cases, mixing may take place above the said temperature, in case no phase separation will occur upon cooling to the above mentioned temperature.

In principle, monomers and/or oligomers useful for the photopolymerizable component can be selected without limitation, as long as the monomer(s)/oligomer(s) is/are photopolymerizable and its mixture with the LC or LC mixture will be homogeneous. It is preferred to use relatively polar educts, in order to provide surface forces within the mixture that are just too low and just not sufficient to provoke a phase separation of the mixture with the liquid crystals. However, this is not a mandatory measure since miscibility with the LC or LC mixture may be properly adapted with the aid of additives, e.g. surfactants or the like, as known in the art.

It is preferred to use compounds having at least one C=C double bond. The said or at least one of the C=C double bonds may be part of a so called Michael system, e.g. containing the fragment C=C-C=O. Alternatively or in addition, so called thiol-ene combinations wherein a thiol compound is added to a compound having a C=C double bond, and/or compounds having epoxy groups may be used. More preferably, a mixture of monomers and/or oligomers having a different number of double bonds is used. One example is the combination of penta-acrylates with di- or tri-acrylate in order to optimize both the functionality and viscosity of the pre-polymer material. In a specifically preferred embodiment, a mixture of approximately 1:4 or 1:2 of di- to penta-acrylate is used in order to assist homogeneous mixing. With such a mixture, optically transparent recording films of desired thickness, e.g. 6-20 µm, can easily be prepared.

As an example, suitable monomers and oligomers may be selected from the group comprising acrylates and methacrylates, such as diethylene glycol diacrylate, diethylene glycol dimethacrylate, triethylene glycol diacrylate, triethylene glycol dimethacrylate, trimethylol propane, diallyl ether, trimethylolpropane triacrylate, pentaerythritol triacrylate, pentaerithritol tetracrylate, pentaerythol pentacrylate, and dipentaerythrytol hydroxy pentacrylate. Bifunctional or multifunctional acrylates as the photopolymerizable component have the advantage that they typically exhibit a high compatibility with low-molecular liquid crystal components which allows to use a high LC concentration and to prepare recording films having a high optical quality.

As an example of non-acrylate monomers, pentaerythritol tetrakis (3-mercapto) propionate can be mentioned, which may be added to a C=C-containing compound, e.g. vinyl compounds. For example, photocurable components normally used as adhesives and containing different thiol-ene monomers and oligomers in the combination with acrylate compounds, e.g. Norland NOA®-61,65,68,81, can be used. The proper selection will result in such a mixture which is initially homogenous, but which under the polymerization conditions will undergo a process of phase separation, separating the the liquid crystal component from the growing polymer network, by which the morphology of the resulting structures is attained. Use of thiol-ene polymerizable components are favorable, due to their specific photopolymerization kinetics. This is because the combination of step-growth and free-radical reaction between multifunctional aliphatic thiols and vinyl monomers containing "ene" groups result in a late "gelation - point". Moreover, most of the double bonds are consumed while the precursor is still liquid. Due to these features, it is possible to compose the photopolymerizable mixture exclusively, essentially or substantially from the photopolymerizable component and the liquid crystal component only, without the addition of auxiliary components, e.g. surfactants, and to arrive at a two-phase structure as detailed above, upon proper irradiation as described.

The second component of POLIPHEM material is a liquid crystal (LC) component. This component allows the electro-optical response of the resulting structures. Suitable LCs, used in practice of the present invention may include any types of LC. Selection of a proper LC or LC mixture for the photocurable mixture is not critical. This means that e.g. any of nematic, cholesteric or smectic molecules can be used, wherein the liquid crystals may be used alone or in admixture with other components as known from the art. The LC mixtures may additionally contain dopants in order to obtain a further functionalisation of LCs and thus, resulting in additional desired properties of the final device. Such dopants may be e.g. dye molecules or photochromic molecules.

The concentration of LC utilized should be sufficiently high to allow a significant phase separation of the mixture upon irradiation, but should not exceed the amount beyond which PDLC structures might be formed which, as outlined above, are opaque and hazy. If the liquid crystal component is present in an amount below 20% by weight of the prepolymer mixture or polymerizable mixture, a rather weak difference of the refractive indices in the first and second areas will occur, even if a full phase separation occurs, and consequently, diffraction efficiency would be low. On the other hand, if the LC component is present in an amount of more than 45% by weight, the product will mostly become highly scattering, and its diffraction efficiency and transmittance decreases. Thus, it is preferred to incorporate the LC component in a proportion of 25 to 45% by weight, in relation to the weight of the prepolymer mixture, and more preferably in a proportion of approximately 35-40% by weight. Such mixtures typically result in a film or coating which shows high diffraction efficiency, optical clarity and good electro-optical parameters.

Addition of a surfactant (e.g.octanoic acid, heptanoic acid, hexanoic acid and the like) has an effect on the miscibility of the components (i.e. increases miscibility), increases the optical performances of film and deceases the switching voltage. For example, Fluorad RTM FC-430 or Fluorad RTM FC-431 can be used in a weight concentration 0.2-5%, related to the weight of the polymerizable mixture.

As far as the polymerizable mixture requires a photoinitator for starting polymerization, the sensitivity of the prepolymer materials to illumination light is determined by the presence of such a photoinitiator and its concentration. Type and concentration of photoinitiator will be selected considering the irradiation wavelength required or desired and the compounds to be polymerized. In this context, the expression "photopolymerizable" is used to include not only the possibility of polyaddition, but also of polycondensation, and the expression "photopolymerizable compound" or "photopolymerizable mixtures" shall encompass any compound having one or more functional groups which participate in the curing of the polymer matrix. Photoinitiators are activated by irradiation with actinic light and free active radical formation. Free radicals created usually start the polymerization process.

Conveniently, photoinitiators to be employed, if necessary or desired, are commercially obtainable substances. For example, Irgacure®184, Irgacure®1700, Irgacure®500, Irgacure®369, Irgacure®1117 (Ciba ― Geily), Michlers ketone, (1-hydroxycyclohexyl) phenyl ketone, benzophenone or similar derivatives can be used for UV irradiation recording. For blue-green and red light sources the known photoinitiator systems like Irgacure 784, dye rose bengal ester, rose Bengal sodium salt, campharphinone, methylene blue and like with electron donor (co-initiators) can be used. Coinitiators can be employed in order to control the rate of curing in the free radical polymerization of the original prepolymer. Suitable coinitiators are N-phenylglicine, triethylamine, thriethanolamine and like.

The Norland Products, NOA® adhesives, employed in the below examples, include their own photoinitiator (for UV region of spectra). Other initiators can also be used, such as benzophenone, 2,2-diethoxyacetophenone (DEAP), benzoin, benzil or Irgacure®1700, Irgacure®369 as additives to Norland NOA®-61,65,68,81 to increase the photosensitivity in UV region of the spectrum and to complete a phase separation process between polymer and LC components.

It has been found that the best results in respect to the quality of the final devices, their diffraction efficiency and their electrooptical behaviour were achieved using an initiator amount of 0.5-2 % by weight and a coinitiator in an amount of up to 2-3 % by weight.

As mentioned earlier, it is preferred that the mixture is homogeneous and preferably isotropic. A skilled person is able to select the components accordingly. In many cases, mixing the two major components results in an isotropic, homogeneous mixture, without any additional measure. This is for example the case if the photocurable monomers and/or oligomers are selected such and in such a relation that the anisotropy of the "liquid crystals" is slightly disturbed and consequently, they do not behave as liquid crystals in the said mixture. Photocurable monomers or oligomers which behave as described are for example molecules having a globular or more or less coiled or bulky shape, and which at least do not have the rod-like structures of the liquid crystal molecules. Pentaacrylates are an example for such molecules, while the skilled artisan is aware of a multiplicity of others. Such a disturbance may instead or in addition be obtained by a proper selection of physical interaction of the molecules, e.g. attraction or repulsion forces (like ionic or Van-der-Waals forces). Alternatively or in addition, other measures may be taken in order to disturb the anisotropy of the LCs, e.g. photochemical means (e.g. irradiation) by which non-mesogenic isomers are reversibly generated for a limited time period, a proper selection of the temperature profile at the time of mixing the components and subsequent cooling, application of a magnetic field, or the addition of photochromic additives. Of course, that part of the molecule mixture which upon irradiation will constitute the liquid crystal areas of the film to be used as an optical element must then, again, exhibit "normal" anisotropy of liquid crystals, i.e. must have at least nematic properties.

All components are mixed together by suitable means (e.g. ulta-sonification). The thus obtained starting mixture is a homogeneous, in general optically transparent blend.

According to the present invention, the said mixture is brought into the shape of a film, either on a substrate or between two such substrates. The above described first and second areas are preferably formed in this film by irradiation using a relatively low exposure intensity, the specific value of which will be selected dependent on the materials employed, as known to a skilled artisan. The intensity is selected such that it will ensure a relatively low photopolymerization rate of the local monomers/oligomers present in the bright regions of the inhomogeneous light field. As a consequence, the LC molecules and also possibly a minor part of polymerizable material, e.g. monomers or smaller oligomers, may diffuse from the bright regions to the dark regions which- results in a more or less full phase separation of the initial mixture. The driving force for the diffusion of the low-molecular weight substances (LC, for example) is believed, according to literature, to be based on mainly two effects: The first one is the photopolymerization of the crosslinkable polymerizable material which results in a shrinkage of this material, driving out smaller molecules in a sponge like manner. The second one is the tendency of the material to separate into different phases since the surface properties of the polymerizable materials used in the present invention and those of LC materials or mixtures differ markedly and the initial materials are such that upon their admixture, they remain just homogeneous, the forces for a phase separation being only little lower than the attraction forces.

The appropriate choice of all components of the photopolymerizable mixture (photopolymerizable monomers, LC, initiator system and additives, if required) and adjustment of their concentration, as described above, ensure high optical and electrical switching parameters of the final structures. The first component (photopolymerizable monomer(s) and/or oligomer(s)) will supply the formation of a closely cross-linked network under irradiation which tends to force the second phase material, the LC component, to anisotropically diffuse out of the forming or formed polymeric areas (which build up in the bright, irradiated parts) into well-definable regions comprising merely, substantially or mainly LC molecules or a LC mixture. These regions may be well aligned "line-like" areas. The photoinitiator system and the intensity and wavelength of the actinic light, and parameters of different steps of the polymerisation process (initiation, propagation and termination) should control the rate of polymerization, phase separation of components and the final two-component structure of POLIPHEM.

The resulting structure may be a POLIPHEM film contained within a cell comprising of two substrates preferably made of glass or plastic and coated with a conducting film (Fig.1.), e.g. of a transparent indium-tin-oxide (ITO) conducting film as known from LCD devices, which facilitates the application of an electric field across the film. At least one of the substrates should be transparent to allow transmission of the applied light. Spherical or cylindrical spacers are used to separate the glass substrates and maintain the cell thickness d throughout the cell. Usually the thickness of the cell varies from about 5 up to about 50 µm. To obtain such a film, the liquid or viscous starting mixture is usually filled into the space between the said substrates.

Thus, POLIPHEM structures (preferably holographic transmission and reflection (nonslanted or slantwise) volume diffraction gratings) form during exposure of the originally homogeneous, preferably isotropical film under conditions by which first areas of the film are irradiated, while second ones are not or substantially not. This irradiation may be performed e.g. either by using a maks or by holographic recording, i.e. a recording of light using 2 or more monochromatic beams of actinic light in such a way that the light intereferes in the film plane. Typical "holographic" recording set-ups can be used to fabricate POLIPHEM structures. After spatial filtering, expanding and division of an initial laser beam on the beam-splitter, the resulting beams are intersected and form the interference picture that is recorded in the volume of the reactive layer (or, in other words, by which the reactive layer is irradiated). The recording field, consisting of the constructive (bright) and destructive (dark) interference regions within the expanded beams, establishes a periodic intensity profile through the thickness or volume of the film. Recording beams penetrate into the film from the same side of the film if transmission gratings are to be fabricated, and and from different sides if reflection gratings shall be formed (symmetrically - in the case of nonslanted gratings and asymetrically - in the case of slantwise gratings). Such non-homogeneous illumination initiates a locally fast polymerization of photopolymerizable monomers and/or oligomers in the bright regions of the mask or interference field which, however, is not too fast to allow escape of the smaller monomers so that the brighter regions are completely, almost or mainly depleted from LC molecules. The monomer concentration gradient causes a diffusion of photopolymerizable units from the dark to the bright regions, due to shrinkage effects which develop a sort of drawing force, while and the the second component, such as nematic or other liquid crystals, are forced into the opposite direction, due to phase separation tendencies and photopolymerization forces which act like a sponge, pushing small molecules out of the growing polymer network. Therefore, the smaller molecules, i.e. liquid crystal molecules, but possibly also smaller unreacted monomers, diffuse into the dark regions of the interference field. Thus, alternating well-defined regions of more or less or completely pure LC or liquid crystal mixture, separated by well-defined, more or less or completely pure polymer regions can be produced in-situ in a controllable way, as shown in FIG.1 (a). If irradiation is employed using an interference field or lithographic method (amplitude mask), and if the parameters are selected such that the areas of polymer and of LC (mixture) are pure or almost pure, this periodical difference in composition of the material, its density (and thus refractive index of the material of the film) ensure the formation of a phase hologram (grating). This can be obtained by irradiation with a proper intensity distribution of the actinic light in the interference field or by the mask in such a way that the LC areas or regions are obtained in a shape forming well aligned "fringes", divided by likewise formed polymer "fringes", resulting in non-scattering, anisotropic areas. The proper adjustment of the exposure intensity ensures the formation of the mentioned lined structure. Under the application of the external electrical, electromagnetic or magnetic field, the grating can then be switched from the diffraction to the non-diffraction state, due to the matching between the refractive index of LC and polymer Fig. (1b).

No specific measures during irradiation are required. Normal room conditions, e.g. ambient temperature and pressure are sufficient. Proper exposure intensity allows controlling the rate of the monomer photopolymerization such that the diffusion of LC molecules or components is not prohibited or hindered in any moment of time. Low-rate diffusion of LC ensures the formation of the continuous LC structures, e.g. lines, fringes or the like.

The exposure intensity itself can be properly selected by a skilled artisan in the light of the physical properties of the selected chemical components. Specifically, the ratio of the polymerization rate to the diffusion rate is important to allow sufficient time for the smaller molecules and especially the LC molecules to escape from the forming polymer network. Clearly, the polymerization rate can be controlled by means explained above. Diffusion rate is determined by the diffusion coefficients of the smaller sized components, mainly LC molecules, which inter alia are dependent on the diameter and shape of the molecules, their hydrophilic/hydrophobic properties relative to that of the growing polymer network. Thus, for each mixture, the respective parameters will be individually selected as known in the art. Reference is made to relevant articles, e.g. J.R. Lawrence, F.T. O'Neil, J.T. Sheridan, Optik 112 (2001) 449, G.M. Karpov, V.V. Obukhovsky, T.N. Smirnova, V.V. Lemeshko Spatial transfer of matter as a method of holographic recording in photoformers Opt.Comm. 174 (2000) 391-400), or Smirnova T.N., Sakhno O.V. Kinetic peculiarities of holographic recording in photopolymers // Proc. SPIE, 1998, V. 3488, PP.276-284. For example, if the basic mixture contains thiol-ene polymerizable components, an irradiation intensity of from about 0.1 to 200 mW/cm2 with UV actinic light, depending on the concrete material and the efficiency of phase separation, may be used. More preferably, the intensity does not exceed 100-150mW/cm² and is even more preferably in the range of about 20 to 50 mW/ cm². For other photopolymerizable components, e.g. pure acrylate photopolymers, the values of the intensity used may be different.

If the intensity of irradiation exceeds an upper limit beyond which the polymeriation rate is too high to allow monomers to sufficiently diffuse from the growing polymer network, the formation of PDLC structures are observed. These PDLCs are characterized by much stronger light-scattering and by the absence of anisotropy after the fabrication step.

The resulting polymer-LC material has a spatial distribution of LC (with a non-droplets morphology) within the photochemically cured polymer matrix. Due to the almost uniform LC director's alignment within the LC-rich planes of POLIPHEM, that takes place during the exposure, these structures are polarization dependent and hence the POLIPHEM reveals the anisotropy after the exposure step, in contrast to the usual (H)PDLC. Microscopic images of POLIPHEM gratings with Λ=1.2 µm and 0.85 µm, d=8 µm and part of Fresnel lens based on POLIPHEM (with a distance between fringes near 6 µm) between crossed polarizers are shown in Fig. 2.

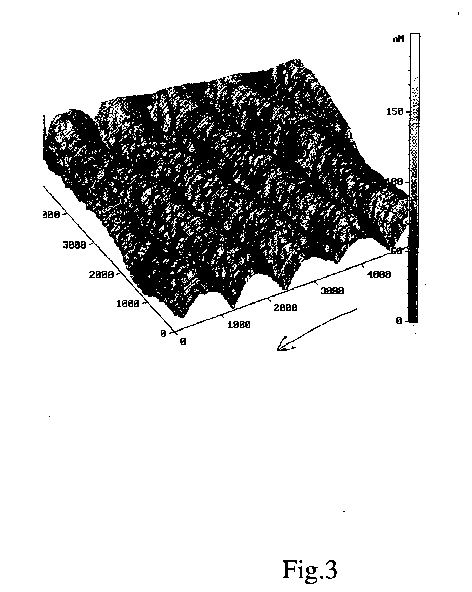

Evidence of the non-droplets morphology of LC inside the LC-rich regions of POLIPHEM can be given by the observation of the relief structure of POLIPHEM layers after the removal of one substrate. Fig.3 presents the AFM picture of such treated grating with Λ=1.2 µm, d=14 µm,The depth of the surface relief *h* is up to 120 nm and more.

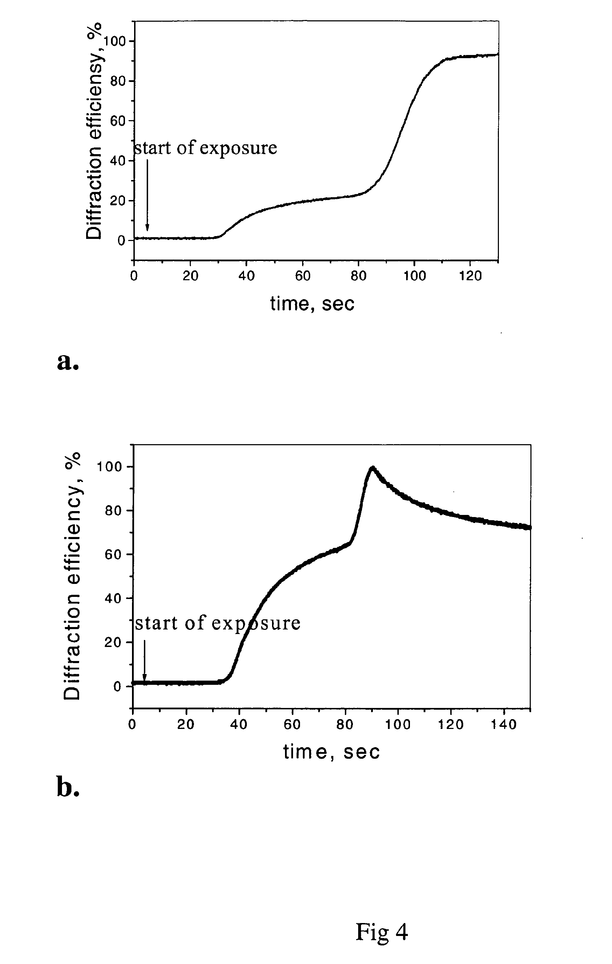

Formation of POLIPHEM can be controlled by observing the shape of the kinetic curve during irradiation (through a mask or by holographic recording) One example of such a curve is given in Fig.4 a. Usually non-actinic light in real time is used for this observation, for example, the beam of a He-Ne laser. This beam penetrates into the recording layer under the corresponding Bragg angle (adjusted for the used period of structure). A two-stages curve shows the presence of two coexisting processes - the first corresponds to the formation of a phase grating (at the level of diffraction efficiency near 30%) probably due to a fast photopolymerization of monomer/oligomer in the bright regions of the light periodic field (I stage). The second process corresponds to the increase of the refractive index modulation of grating (and diffraction efficiency) due to the irreversible diffusion of LC into the regions of low photopolymerization (II stage). Final diffraction efficiency of gratings can be high (up to 98% at λ=632.8 nm for p-polarized light). When such specific kinetic curve cannot be observed, formation of POLIPHEM usually does not take place.

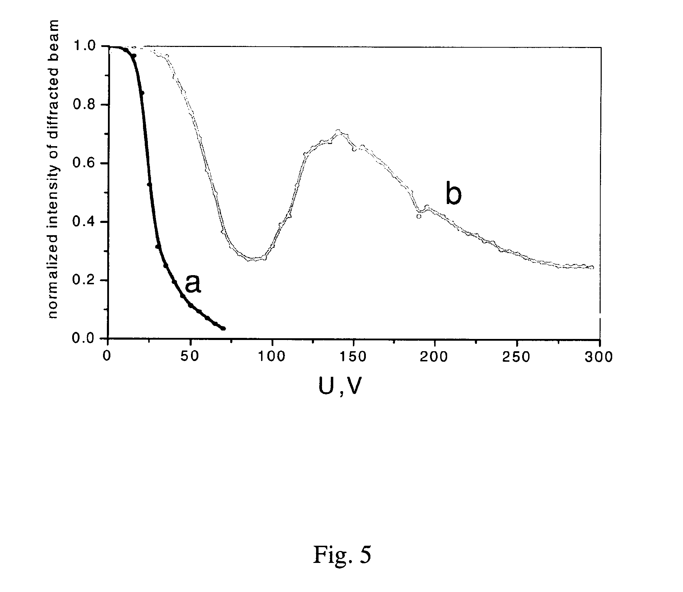

In the diffracted state ("off-state"), an electric field can be applied to the POLIPHEM structure which is able to change the final orientation of LC director in the LC regions therein which causes the refractive index modulation of the "fringes" to reduce and then the grating diffraction efficiency to decrease up to very low values ("on-state") Fig.5. illustrates that in a POLIPHEM structure, switching between the diffracting state and the transparent state is fast (for about 15-20 µsec.). Maximum obtained contrast ratio between "off-state" and "on-state" is near 300.

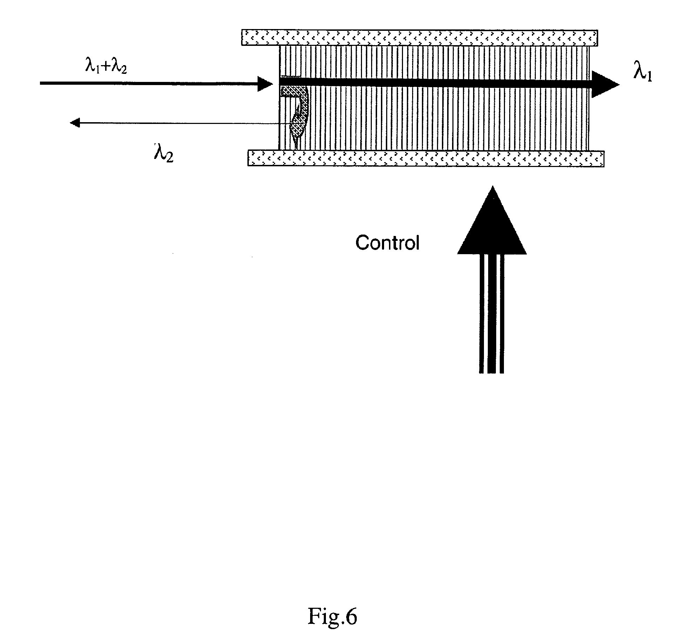

In specific cases, POLIPHEM structures may be used as waveguide reflection Bragg gratings. For this purpose, the light should be penetrate into the film though the lateral edge of the POLIPHEM grating. In these cases, POLIPHEM are fabricated as transmission gratings and will act as reflection grating for the light in a waveguide mode propagation. The extremely large spectral shift of the narrow-width selectivity band can be achieved by the application of an electrical field or by temperature processing. The controlled reflectivity and transitions of the light by such type of the optical element could achieved by the following (see Fig. 6): Light with a spectral width from λ₁ up to λ₂ at the input of the waveguide will be divided into two parts - the first, corresponding to the reject band of the POLIPHEM based waveguide filter, will be reflected back and the second part of the light will pass through the element. With application of the voltage the spectral band will be shifted and, consequently, the spectral range of transmitted and reflected light will be changed, too.

This opens the possibility to use POLIPHEM structures as or within different elements, e.g. for visual displays and optical telecommunication systems like mirrors, line filters, electro-optical switches and like.

Reflective holographic polymer-liquid crystal elements exhibit narrow wavelength bands with high reflection efficiency and can be controlled by the electric fields. Therefore, they are attractive candidates for numerous applications, for example, reflective display. Such switchable reflection HOE can be fabricated on the base of POLIPHEM structures as well, as outlined above. Under application of the field across such reflection grating it can be switched between a state where it is reflective and the state where it is transitive.

In the fabrication of the reflection POLIPHEM, some specific demands should be fulfilled. For example, nematic liquid crystals or liquid crystal mixtures having a negative dielectric anisotropy Δε must be utilized as LC component in the polymerizable mixture. In reflection structures, the fringes should be placed completely or almost parallel to the substrates, and the director of LC will be align along the gratings vector (which is almost perpendicular to the substrates surfaces in the "off-state"). To control the grating parameters at the electric field application, LC must be rotated perpendicular to the electrical field vector E, then Δε should be negative. Two-frequency LC can be used for the same aim (LC in which Δε is changed for different frequencies of the applied voltage).

Switching of the reflective grating in case of a positive anisotropy could be done with magnetic filed.

Numerous different monomers and LCs may be combined in solution and photopolymerized in accordance with the present invention, and the LC concentration within the solution may be varied considerably. Several specific examples will now be described, and these examples are intended to illustrate various implementations of the invention, and are not intended to be limiting.

### EXAMPLE 1 (Comparative Example)

Samples of photopolymerizable mixture were fabricated using NOA®68 optical adhesive produced by Norland Products, Inc., New Brunswick, N.J., and 5CB (Merck) cyanobiphenyl liquid crystal mixture in a 60:40 ratio, by weight. Surfactant FC-431 2wt. % and UV photoinitiator Irgacure®369 (Ciba) 0.5% were added. All components were thoroughly mixed and then used for drop filling between ITO (indium-tin oxide) coated glass substrates with 8-15 µm Mylar.RTM spacers. All operations were made at room temperature. The cells filled with isotropic liquid were exposed to an interference field of 365 nm Ar-laser wavelength with vertical (s-) polarization of the recording beams. The exposure time was varied in the range 100-300 sec, and the intensity of the curing laser light (for both beams) was in the range 200-250 mW/cm². Volume transmission gratings with periods 1.5-0.3 µm were recorded in the test cells at 22° C (room temperature). Real-time behaviour of the grating's diffraction efficiency (kinetic of holographic recording) was tested by Ne-He laser beam with horizontal (p-) and/or vertical (s-) polarization, which was input into the cell at the appropriate Bragg angle. Diffraction efficiency (DE) is determined as a ratio of the intensity of the diffracted beam to a sum of the diffracted and transmitted ones. Under the mentioned recording conditions the common holographic PDLC structures (prior art) were produced. This was proven by the presence of a light scattering in the samples which is due to LC droplet formation of the samples as described above, by the absence of anisotropy after holographic recording, and a rather low diffraction efficiency, not more than 60%.

### EXAMPLE 2

Reactive mixture and samples were fabricated as for Example1. The cells filled with isotropic liquid were exposed to the interference field with wavelength 365 nm and s-polarization of the recording beams to record the transmission gratings with periods 1.5-0.3 µm at 22°C. The total intensity of the laser light (for both beams) was varied in the range 40÷60 mW/cm². As an example, kinetic curve of the holographic recording of grating with Λ=0.9 µm, d=8 µm is shown at Fig.4.a; it has a two-stages behavior: the first stage is due to polymerization process and the second one is due to a phase separation process. As result, the POLIPHEM structure was created. DE was near 98% (on 632.8 nm for p-polarization of the tested beam). Almost full absence of the light-scattering and high anisotropy of the grating after the holographic exposure was observed. The electro-optical properties (dependence of DE via applied electric field) of such structures are shown on the Fig.5, curve 1.

### EXAMPLE 3

Reactive mixture and samples were fabricated as for Example 1,2. Volume transmission gratings with periods of 1.2-0.5 µm were recorded at 22°C. The cells were placed into the interference field with wavelength 365 nm. The used light intensity was varied in the range 60÷100 mW/cm². Kinetics of the holographic recording is shown at Fig. 4b (Λ=0.9 µm, d=8 µm). It has three-stages behavior: the first stage is due to the polymerization process and the second one due to phase separation processes. The third stage shows a decrease of the diffraction efficiency due to over-modulation of the grating. In this case, POLIPHEM system was created also. DE of the transmission volume grating is the sinus function of the thickness d multiplied on the refractive index modulation, Δn. If DE reaches 100% (on 632.8 nm p-polarization of tested beam) and then falls up to proper value (over-modulation), it means that the refractive index modulation (Δn) of the grating rises. Then Δn of the grating from Sample 3 is higher than for Sample 2. This Sample was characterized by almost full absence of light-scattering and anisotropy after holographic recording. The electro-optical response is shown on the Fig.5, curve 2. The difference from the Example 2 that is the switching curve has two inflections during the increase of the applied voltage. It can be explained by the specific alignment of LC in the over-modulated grating.

## Claims

1. Rigid or flexible film, having first areas being composed of photocured polymer and second areas being solely, substantially or mainly composed of liquid crystals or a liquid crystal mixture,
**characterized in that** (a) the first and second areas alternate in at least a first plane, while the composition of the film is substantially invariable in at least one direction which is angular to the said first plane, or that (b) at least one of either the first or the second areas is completely surrounded by the other area and the said areas are located in a periodic pattern.

2. Film according to claim 1, wherein in alternative (a), the first and second areas do not alternate in a second direction perpendicular to said first plane.

3. Film according to claim 1 or 2, wherein in alternative (a), the first and second areas either extend from one surface of the film to the opposite surface, or are layers extending along the film plane.

4. Film according to any of claims 1 to 3, wherein the first and second areas constitute spatially periodic structures, preferably straight or curved fringes.

5. Film according to any of the preceding claims, wherein the film has a thickness of about 1-100 µm, preferably 4 to 50 µm and more preferably 5 to 25 µm.

6. Optical element, comprising a film according to any of claims 1 to 5, disposed on a flat, light transmitting substrate or beween two flat substrates at least on of which is light transmitting.

7. Optical element according to claim 6, wherein the first and the second substrate are provided with means for application of an electrical, magnetic or electromagnetic field therebetween.

8. Optical element according to claim 7, wherein the means for generating an electrical field includes a conducting film covering at least part of the inside of the substrates.

9. Optical element according to any of claims 6 to 8, wherein the optical element is a diffractive element selected from elements having 2D geometry wherein areas the composition of which is substantially invariable extend either from one surface of the film to the opposite surface, or wherein the film consists of layers the composition of which is substantially invariable and which extend along the film plane, and elements having 3D geometry, at least one of either the first or the second areas is completely surrounded by the other area.

10. Optical element according to claim 9 wherein areas of the element having 2D geometry the composition of which is substantially invariable extend in a perpendicular or tilted angle in relation to the surface of the film.

11. Optical element according to any of claims 6 to 9, wherein the first areas are
**characterized by** a optical dielectric constant with a value that remains substantially constant if an electric, magnetic or electromagnetic field is applied thereon.

12. Optical element according to any of claims 6 to 11, wherein the second areas are
**characterized by** optical birefringence which varies under the influence of an electric, magnetic or electromagnetic field.

13. Optical element according to any of claims 6 to 12, wherein the distance of the center of the first area to the center of the second area is in the range of about 150 nm to 10 µm.

14. Use of an optical element as claimed in any of claims 6 to 13, wherein the use comprises orientation and/or reorientation of the liquid crystals in the second areas by application of an electric, electromagnetic or magnetic field such that the element may be switched between a diffracted state (off state) and a non-diffracted state and optionally any intermediate state between said states which intermediate states vary in refractive index of the second areas.

15. Use of an optical element as claimed in any of claims 6 to 13, preferably according to claim 14, in an optical telecommunication device, wherein the optical element is preferably selected from bi-directional electro-optical switches, variable optical attenuators (VOAs), tunable Bragg grating filters (TBG filters), wavelenght division multiplexers, which can be realized either in free-space or planar waveguide architecture, switchable beam-steering devices for freespace optical coupling or other purposes, tuneable spectral filters and waveguide systems.

16. Mixture, comprising at least a first component, consisting of one or more photocurable monomers and/or oligomers, and a second component, consisting of one or more liquid crystals or a liquid crystal mixture, and further comprising a photoinitiator, if required or desired for photopolymerization of the photocurable monomers and/or oligomers, **characterized in that** the mixture is homogeneous and optically clear within a temperature range of at least between 20 to 25°C, more preferably of at least between 15 and 25°C.

17. Mixture according to claim 16, which is optically isotropic or anisotropic within a temperature range of at least between 20 to 25°C, more preferably of at least between 15 and 25°C.

18. Mixture according to any of claims 15 to 17, further comprising a surfactant.

19. Mixture according to any of claims 15 to 18, wherein the first component is selected from one or more compounds of the group consisting of unsaturated monomers or oligomers, more preferably of monomers or oligomers which may undergo a Michael addition, a combination of thiol-compounds and compounds containing at least one C=C bond which may react in a thiol-ene reaction, and epoxy compounds.

20. Mixture according to any of claims 15 to 19, wherein the second component is selected from the group of nematic, smectic and cholesteric liquid crystals and liquid crystal mixtures, optionally doted with dye molecules or photochromic molecules, the liquid crystals having a negative or a positive dielectric anisotropy Δε.

21. Mixture according to any of claims 15 to 20, in the shape of an optically transparent, thin film spread on a substrate or filled into the space between two substrates.

22. Method for the production of a film according to any of claims 1 to 5 or of an optical element according to any of claims 6 to 13, comprising the following steps:
(a) providing a homogeneous mixture as defined in any of claims 16 to 21,
(b) preparing an optically transparent film of said mixture on a substrate or filling said mixture into the space between two substrates, at least one of which being actinic light transmitting,
(c) irradiating at least one surface of the film with an inhomogeneous light field of actinic light such that areas of the film are irradiated while others are not or substantially not, the irradiation having an intensity sufficiently low that under the irradiation, first areas being solely, substantially or mainly composed of photocured polymer form, while the liquid crystal or liquid crystal mixture components completely, substantially or mainly escape into second areas which are not or substantially not irradiated, whereby the said film is formed, and
(d) removing one or both of the substrates, if the film alone is to be prepared.

23. Method according to claim 22, wherein both surfaces of the film are irradiated.

24. Method according to claims 22 or 23, wherein the irradiation is performed with a periodic or non-periodic light field.

25. Method according to any of claims 22 to 24, wherein the inhomogeneous light field of step (c) is obtained by irradiation with at least two monochromatic, coherent beams of actinic light which are angular to each other such that an interference pattern is recorded in the volume of the film (holographic recording).

26. Method according to any of claims 22 to 24, wherein the inhomogeneous light field is obtained using a lithographic method, preferably a mask.

27. Method according to any of claims 22 to 26, wherein the irradiation intensity is in the range of 0.1 to about 200 mW/cm², and preferably does not exceed 140 W/cm².
